**Europäisches Patentamt**

**European Patent Office**

**Office européen des brevets**

(19)

(11) Veröffentlichungsnummer: **0 012 290**
A1

# EUROPÄISCHE PATENTANMELDUNG

(12)

(21) Anmeldenummer: **79104800.2**

(22) Anmeldetag: **01.12.79**

(51) Int. Cl.³: **C 09 C 1/42**, C 04 B 33/10

(30) Priorität: **06.12.78 DE 2852673**

(43) Veröffentlichungstag der Anmeldung: **25.06.80**
**Patentblatt 80/13**

(84) Benannte Vertragsstaaten: **BE DE FR GB IT**

(71) Anmelder: **BAYER AG, Zentralbereich Patente, Marken und Lizenzen, D-5090 Leverkusen 1, Bayerwerk (DE)**

(72) Erfinder: **Endres, Robert, Dr., Hahnenweg 1, D-5000 Köln 80 (DE)**
Erfinder: **Drave, Heinz, Dr., Christian-Hess-Strasse 69, D-5090 Leverkusen 1 (DE)**
Erfinder: **Mansmann, Manfred, Dr., Oskar-Schlemmer-Strasse 2, D-5090 Leverkusen 1 (DE)**
Erfinder: **Puppe, Lothar, Dr., Gisbert-Cremer-Strasse 45a, D-5090 Leverkusen (DE)**

(54) **Verfahren zur Herstellung von geglühten Tonpigmenten und deren Verwendung.**

(57) Gegenstand der vorliegenden Erfindung ist ein Verfahren zur Herstellung eines Tonpigmentes durch Glühen von Ton, wobei der Ton in Gegenwart von ungefärbten Halogeniden und/oder von Halogenen bei Temperaturen zwischen 700 und 950°C geglüht wird sowie die Verwendung der solcherart hergestellten Tonpigmente für die Einarbeitung in Farben, Lakken, Füllungen und Beschichtungen.

EP 0 012 290 A1

BAYER AKTIENGESELLSCHAFT          5090 Leverkusen, Bayerwerk
Zentralbereich
Patente, Marken und Lizenzen     Br/Th c


Verfahren zur Herstellung von geglühten Tonpigmenten

und deren Verwendung


Pigmente aus geglühten Tonen, insbesondere Kaoline, die in der Papierindustrie Verwendung finden, sind z.B. in der englischen Patentschrift 1 441 652 beschrieben. Der bei Temperaturen zwischen 700 bis 1000$^{\circ}$C destrukturierte Kaolin zeigt wegen seiner weitgehend amorphen Beschaffenheit und der Feinheit der Teilchen gute Eigenschaften der daraus hergestellen Papierbeschichtung mit besonders glatter Oberfläche und besserer Bedruckbarkeit im Vergleich z.B. zu ungeglühten oder nicht vollständig destrukturierten Kaolinen. Nach Jour. Amer. Soc. 35, 205 (1955) werden die bis 950$^{\circ}$C erhältlichen Kaolin-Glühprodukte Metakaolin genannt. Bei Temperaturen über 980$^{\circ}$C bildet sich aus dem amorphen Metakaolin eine Spinellphase, die sich bei noch höheren Temperaturen in Mullit und Cristobalit umwandelt.


Le A 19 248 -Ausland

- 2 -

Für die Verwendung von calcinierten Tonpigmenten in der Papierindustrie sind diese Hochtemperaturphasen unerwünscht, da insbesondere die Abrasivität des Pigmentes stark zunimmt, was sich nachteilig auf die Lebensdauer der verwendeten Aggregate auswirkt.

Daher können zur qualitativen Beurteilung von Pigmenten in dem vorliegenden Zusammenhang Röntgenanalyse und Abrasivitätstest herangezogen werden. Ein ideales Pigment in diesem Sinn muß daher das Röntgendiagramm des Metakaolins zeigen, ohne Spinell, Mullit und Cristobalit und eine möglichst geringe Abrasivität haben. Unter Abrasivität soll verstanden werden, daß der Abrieb von Stahlkugeln in einer Kugelschwingmühle gravimetrisch bestimmt wird, der durch die Pigmentdispersionen hervorgerufen wird (Bestimmung nach S. Keifer und A. Wingen, Farbe und Lack, 79. Jahrgang 9, Seite 866 bis 873, 1973).

Eine andere wichtige Anforderung ist die Farbe. Metakaoline für z.B. Papierbeschichtungen sollten eine Helligkeit L von oberhalb etwa 90 und einen möglichst geringen Gelbstich besitzen. Unter Farbe soll in diesem Zusammenhang verstanden werden, daß entsprechend dem Farbmeßsystem der Firma Hunter, Fairfax, Virginia, USA, die Helligkeit L und der Gelbstich b des calcinierten Tonpigmentes gemeint sind, wobei L und b an dem Farbmeßgerät D 25 D 2 P dieser Firma mit der Meßgeometrie $8^{\circ}/0^{\circ}$ und Normlichtart C bestimmt werden.

In der US-Patentschrift 3 941 872 ist ein Verfahren beschrieben, nach dem Kaolin entwässert und in einem ersten

Le A 19 248

Verfahrensschritt bei ca. 870°C unter reduzierenden Bedingungen calciniert und in einem zweiten Schritt zwischen 870 und 1150°C oxidiert geglüht wird.

Aufgabe der vorliegenden Erfindung ist die Bereitstellung eines Verfahrens, bei dem in einem Verfahrensschritt möglichst helle Pigmente mit geringem Gelbstich in einem Temperaturbereich herstellbar sind, in dem der Metakaolin stabil und demnach auch die Abrasivität gering ist.

Gegenstand der vorliegenden Erfindung ist somit ein Verfahren zur Herstellung eines Tonpigmentes durch Glühen von Ton, das dadurch gekennzeichnet ist, daß der Ton in Gegenwart von ungefärbten Halogeniden und/oder von Halogenen bei Temperaturen zwischen 700 und 950°C geglüht wird.

Eine vorteilhafte Ausführung der Erfindung besteht darin, daß die Glühung unter reduzierenden Bedingungen und gegebenenfalls in Gegenwart von Alkaliverbindungen durchgeführt wird.

Das erfindungsgemäße Verfahren ist nicht an den Einsatz eines speziellen Tones gebunden, bevorzugt werden jedoch Tone mit einem Kaolinitgehalt von über 90 Gew.-% eingesetzt, wobei der Eisengehalt vorzugsweise 5000 ppm nicht übersteigen sollte. Nach dem erfindungsgemäßen Verfahren ist es besonders vorteilhaft, die Temperatur bei der Glühung im angegebenen Rahmen möglichst hoch zu wählen. Erhitzt man Kaolin beispielsweise 5 Minuten bis 2 Stunden auf Temperaturen zwischen 700 und 950°C, wobei für die niedrigen Temperaturen die längeren Zeiten und für die höheren Temperaturen die kürzeren Zeiten vorteilhaft angewandt werden, so erhält man ein weitgehend röntgenamorphes Produkt. Besonders vorteilhaft hat sich bei Kaolinen verschiedener Provenienz eine Erhitzung von etwa 5 bis 80 Minuten auf 820 bis 900°C erwiesen. Im konkreten Einzelfall lassen sich die Calcinierungsbedingungen für den Ton durch wenige Versuche anhand der Röntgenaufnahme leicht ermitteln.

Als ungefärbte Halogenide werden Fluoride, Chloride und/oder Bromide, die Halogenwasserstoffe oder die Halogene selbst eingesetzt. Als Kationen kommen die Elemente aller Haupt- und Nebengruppen des chemischen Periodensystems, die unter den genannten Bedingungen keine Verfärbungen hervorrufen, in Frage. Als vorteilhaft haben sich beispielsweise erwiesen, ohne damit eine zusätzliche Einschränkung hinsichtlich der Einsetzbarkeit vorzugeben:

Chlorwasserstoff, Alkali-, Erdalkali- und Erdmetallhalogenide, Halogenide von Bor, Kohlenstoff, Silicium, Phosphor und Schwefel, Zink-, Titan- und Zirkonhalogenide. Besonders bevorzugt wird Kochsalz.

Als Reduktionsmittel verwendet man Kohlenstoff wie z.B. Holzkohle, Petrol-, Torfkoks oder Ruß, also Rohstoffe, die nahezu aschefrei verbrennen und die Farbe des Metakaolins nicht durch Ascherückstände verschlechtern. Außerdem kommen auch Alkalisulfit, -pyrosulfit, -hydrogensulfit oder -dithionit in Frage. Aus wirtschaftlichen und technischen Gründen wird bevorzugt Torfkoks eingesetzt.

Anstatt in Gegenwart von Kohlenstoff kann man die Calcinierung auch im Gasstrom der CO enthält, durchführen. Darüber hinaus kommen auch Generatorgas, Wassergas, Kohlenwasserstoffe und Brennstoffe in Frage, die keine Verunreinigungen im Kaolin hinterlassen.

Unter dem Begriff Alkaliverbindungen sollen im Rahmen der vorliegenden Erfindung z.B. Sulfate, Carbonate, Formiate, Acetate, Oxalate, Hydroxide, Nitrate, Nitrite der Alkalimetalle, insbesondere Lithium, Natrium und/oder Kalium, verstanden werden, nicht dagegen die Alkalihalogenide, die unter den Begriff "ungefärbte Halogenide" fallen. Unter den Alkaliverbindungen wird Soda bevorzugt.

Die Zusatzmenge der Alkali- und der ungefärbten Halogenverbindungen liegt zwischen 0,1 und 10 Gew.-%, berechnet als Alkalioxid bzw. als Halogen und bezogen auf Kaolin, bevorzugt zwischen 0,2 und 2 %. Die Zusatzmengen des Reduktionsmittels liegen zwischen 0,1 und 10 Gew.-%, bezogen auf Kaolin, bevorzugt jedoch zwischen 0,5 und 5 Gew.-%.

Le A 19 248

Die Halogenide und die Reduktionsmittel können in fester
Form dem Ton trocken untergemischt werden, wobei es zweckmäßig ist, möglichst feinteilige Pulver zu verwenden. Die
Vermischung kann auch naß erfolgen, wobei die Verbindungen
der Kaolinsuspension in löslicher oder unlöslicher Form zugesetzt werden.

Die Erhitzung des Tons nach dem erfindungsgemäßen Verfahren, die zu Metakaolin führt, erfolgt in bekannter
Weise, beispielsweise in Muffel-, Kammer-, Telleröfen oder in anderen geeigneten Vorrichtungen.Sofern
man von stückigem Kaolin ausgeht, wird der erhaltene
Metakaolin einer Feinmahlung unterworfen.

Besonders vorteilhaft kann die Calcinierung des Tons
in einem Stoßerhitzungsaggregat erfolgen, wie
es z.B. in der GB-PS 869 966 und US-PS 3 021 195 beschrieben ist. Hierbei wird dem Ton Kristallwasser durch
Stoßerhitzen bei Temperaturen zwischen 600 und 1.000°C
bei einer Verweilzeit von 0,01 bis 5 Sekunden entzogen.
Allerdings wird hierbei nicht die notwendige Mindestverweilzeit von 5 Minuten erreicht, so daß die Stoßerhitzung nach dem Stand der Technik zwar feinteiligen
Metakaolin mit sehr geringem Restwassergehalt liefert
ohne jedoch die erforderliche Aufhellung und Verbesserung
der Farbe.

Le A 19 248

Um die gewünschte Aufhellung und Verminderung des Gelbstichs zu erzielen, ist ein anschließender Temperschritt erforderlich. Diese bevorzugte Ausführungsform des erfindungsgemäßen Verfahrens ist dadurch gekennzeichnet, daß das Entwässern des Tons durch Stoßerhitzung bei Temperaturen zwischen 600 und 1.000°C bei einer Verweilzeit von 0,01 bis 5 Sekunden und anschließende Temperung bei Temperaturen zwischen 700 und 950°C erfolgt.

Einem Aggregat zur Stoßerhitzung wird ein Temperaggregat nachgeschaltet, in das der stoßerhitze Kaolin abgeschieden und auf der erforderlichen Temperatur zwischen 700 und 950°C zwischen 5 Minuten bis 2 Stunden gehalten wird. Werden als Reduktionsmittel CO-haltige Gase verwendet, empfiehlt es sich in diesem Fall, diese direkt in das Temperaggregat einzuleiten. Im Fall des Zusatzes von Kohlenstoff wird nach der Calcinierung der unverbrannte Kohlenstoff durch Zufuhr von Luftsauerstoff verbrannt, wobei die Temperatur bei diesem Schritt ebenfalls im Bereich zwischen 950 und 700°C liegen kann, aber auch tiefer bis herab zu etwa 500°C. Gasförmige Halogenide oder Halogene, vorzugsweise Chlorwasserstoff werden ebenso direkt in das Temperaggregat eingeleitet.

Die heißen Abgase aus dem Stoßerhitzungsaggregat werden energetisch verwertet, wie z.B. zur Mahltrocknung des feuchten, stückigen Ausgangsmaterials, zur Vorheizung der Brennerluft für die Stoßerhitzung und zur Beheizung des Temperaggregates.

Le A 19 248

- 8 -

Das stoßerhitzte Tongemenge unterscheidet sich von Produkten der anderen genannten Calcinieraggregate dadurch, daß es feinteiligere Produkte mit einer größeren spezifischen Oberfläche gibt. Dadurch ist dieses Material im nachfolgenden Temperungsschritt reaktiver und erfordert niedrigere Temperaturen oder kürzere Reaktionszeiten bis zur gewünschten Aufhellung (760 - 840°C, 5 - 60 Minuten).

Die so erhaltenen, aufgehellten Pigmente zeichnen sich außerdem dadurch aus, daß sie im Vergleich zu nicht stoßerhitzten, analogen Pigmenten witterungsstabiler sind, wie die Versuchsergebnisse im Xeno-Kurzzeitbewitterungstest der Tabelle 3 zeigen. Der relative Abrieb ist darüber hinaus geringer (Tabelle 2).

Die erfindungsgemäßen hergestellten Pigmente eignen sich besonders für die Herstellung von Farben und Lacken, Füllungen und Beschichtungen, insbesondere Papierbeschichtungen.

Nachfolgend wird die vorliegende Erfindung anhand von Beispielen verdeutlicht; die ersten vier Beispiele stellen dabei Vergleichsbeispiele, basierend auf dem Stand der Technik, dar.

Der Abrasivitätstest wurde wie folgt durchgeführt:

Le A 19 248

Nach S. Keifer und A. Wingen wurde 10 g Pigment in 20 g destilliertem Wasser angeschlämmt und in eine 250 cm$^3$ Achatkugelschwingmühle zusammen mit 150 g Stahlkugeln mit 2,5 mm Durchmesser aus Wälzlagerstahl gegeben. Nach 2 Stunden Laufzeit wurde die Gewichtsabnahme der Stahlkugeln gravimetrisch bestimmt. Es wurde der relative Abrieb in Bezug auf Beispiel 1 (= 100) ermittelt.

Durchführung des Xeno-Kurzzeitbewitterungstests:

Die zu untersuchende Probe wurde im Dispersionsaufstrich deckend auf eine Aluminiumplatte aufgetragen, getrocknet und mit dem Bewitterungsgerät "Xenotest" (150 W) der Fa. Quarzlampen GmbH, Hanau, unter Verwendung von 5 IR- und 2 UV-Fenstern, bestrahlt. Die Probe wurde in Abständen von 30 Minuten regelmäßig während der gesamten Bestrahlungsdauer mit Wasser besprüht (1,5 Minuten Dauer). In bestimmten Zeitabständen wurde eine Farbmessung nach dem bereits beschriebenen Farbmeßsystem der Firma Hunter durchgeführt und der Farbabstand $\triangle$ E, bezogen auf den Anfangszustand der Farbkoordinaten L, a, b nach der Formel $\triangle E = \sqrt{(\triangle L)^2 + (\triangle a)^2 + (\triangle b)^2}$ ermittelt, Die Versuchszeiten wurden so gewählt, wie sie sich bei der Prüfung der Lichtechtheit bei Drucken von der Papieroberfläche bewährten (siehe auch W. Herbst und K. Merkle, Defazet 32, Nr. 10, S. 366-372 (1978)).

Le A 19 248

Vergleichsbeispiel 1

Als Kaolin für dieses und die folgenden Beispiele wurde ein gebleichter und gemahlener Kaolin mit folgenden Eigenschaften ausgewählt:

Mineralogische Zusammensetzung

| | |
|---|---|
| Kaolinit | 94,5 % |
| Kali-Feldspat | 3,7 % |
| Natron-Feldspat | 0,6 % |
| Quarz | 0,7 % |
| Restminerale | 0,5 % |

Chemische Analyse

| | |
|---|---|
| $SiO_2$ | 46,9 % |
| $Al_2O_3$ | 38,1 % |
| $Fe_2O_3$ | 0,26 % |
| $TiO_2$ | 0,30 % |
| $K_2O$ | 0,63 % |
| $Na_2O$ | 0,07 % |
| CaO | 0,03 % |
| MgO | 0,04 % |
| $P_2O_5$ | 0,36 % |
| $MnO_2$ | 0,01 % |
| Glühverlust | 13,15 % |

Kornaufbau nach Andreasen

| | |
|---|---|
| 20 - 40 /u | 0,1 % |
| 10 - 20 /u | 4,5 % |
| 6 - 10 /u | 11,1 % |
| 4 - 6 /u | 14,3 % |
| 2 - 4 /u | 24,3 % |
| 0 - 2 /u | 45,7 % |

Le A 19 248

**Farbeigenschaften**

Helligkeit L: 93,5

Gelbstich b:   5,0

300 g dieses Kaolins wurden im Muffelofen bei 700°C 3 Stunden geglüht.

Röntgenographisch lag Metakaolin vor.

Relativer Abrieb: 100

Helligkeit L    :   92,4

Gelbstich b     :    6,4

**Vergleichsbeispiel 2:**

300 g Kaolin wurden im Muffelofen bei 880°C 1 Stunde geglüht.

Röntgenographisch lag Metakaolin vor.

Relativer Abrieb: 110

Helligkeit L    :   92,4

Gelbstich b     :    5,7

**Vergleichsbeispiel 3:**

300 g Kaolin wurden mit 1 Gew.-% eines thermischen Flammrußes trocken vermischt und im Muffelofen 30 Minuten im geschlossenen und 30 Minuten im offenen Tiegel bei 880°C geglüht.

Röntgenographisch lag Metakaolin vor.

Le A 19 248

Relativer Abrieb:   130

Helligkeit L    :   95,6

Gelbstich b     :    4,3

Vergleichsbeispiel 4:

300 g Kaolin wurden im Muffelofen 1 h bei 1100°C geglüht. Die Röntgenanalyse ergab, daß es sich um ein Gemisch von Quarz, $\gamma$-Aluminiumoxid und Mullit handelte.

Relativer Abrieb: 300

Helligkeit L    :   95,7

Gelbstich b     :    1,8

Beispiele 5 - 20

Es wurden jeweils 300 g Kaolin mit den in Tabelle 1 angegebenen Zusätzen von Halogenid und gegebenenfalls Reduktionsmittel im Pflugscharmischer vermischt und 1 h bei 880°C geglüht. Der im Beispiel 20 verwendete Torfkoks wies eine Korngröße <0,43 mm auf.

Röntgenographisch lag in allen Fällen Metakaolin vor.

Le A 19 248

**Tabelle 1:**   Relativer Abrieb, Helligkeit L und Gelbstich b von Metakaolinen

Beispiel           Zusätze:

| | % Halogenid | % Reduktions-mittel | relativer Abrieb | L | b |
|---|---|---|---|---|---|
| 5 | 0,9 % LiF | – | 258 | 96,3 | 3,8 |
| 6 | 1,45 % LiCl | – | 131 | 96,5 | 4,1 |
| 7 | 3,– % LiBr | – | 129 | 95,4 | 4,9 |
| 8 | 1,4 % NaF | – | 135 | 96,2 | 4,0 |
| 9 | 3,0 % NaCl | – | 115 | 97,2 | 3,5 |
| 10 | 3,5 % NaBr | – | 122 | 96,9 | 3,7 |
| 11 | 2,0 % KF | – | 122 | 95,9 | 4,1 |
| 12 | 2,55 % KCl | – | 114 | 97,2 | 3,4 |
| 13 | 4,1 % KBr | – | 112 | 97,0 | 3,6 |
| 14 | 2,0 % HCl | – | 119 | 96,5 | 4,0 |
| 15 | 2,3 % $MgCl_2$ | – | 124 | 96,6 | 4,0 |
| 16 | 2,5 % $CaCl_2$ | – | 117 | 96,0 | 4,3 |
| 17 | 2,0 % $AlCl_3$ | – | 117 | 96,6 | 4,0 |
| 18 | 2,9 % $AlF_3$ | – | 131 | 96,3 | 3,9 |
| 19 | 3,0 % NaCl | 2% $Na_2SO_3$ | 121 | 97,4 | 3,1 |
| 20 | 3,0 % NaCl | 2% Torfkoks | 147 | 97,4 | 2,8 |

+ Naßmischung vor der Calcinierung bei ca. 100°C getrocknet.

- 13 -

Beispiel 21

In 1,1 l Wasser wurden 15 g NaCl und 50 g $MgCl_2$ . 6 $H_2O$ (jeweils chem. rein) gelöst und 1 kg Feinpapierkaolin zugegeben. Die Suspension wurde 15 Min. im Kolloidmischer gemischt und anschließend bei ca. 100°C getrocknet. Der Trockenrückstand wurde in einer Bechermühle kurz aufgemahlen und 300 g davon 1 h bei 880°C calciniert. Röntgenographisch lag Metakaolin vor.

Relativer Abrieb:117
Helligkeit L     :  96,4
Gelbstich b      :   3,7

Beispiel 22:

Es wurde 100 g Feinpapierkaolin mit 2 % NaCl (chem. rein) im Pflugscharmischer gemischt. Die Mischung wurde in einem direkt beheizten Drehrohrofen mit einem Quarzrohr von 60 mm innerem Durchmesser und 600 mm beheizter Länge eingetragen. In das Drehrohr wurde während der Calcinierung (45 Min.- 600 - 880°C) ein Kohlenmonoxidstrom (10 l/h) eingeleitet. Das erhaltene Glühprodukt war röntgenographisch Metakaolin.

Relativer Abrieb:  144
Helligkeit L     :  96,8
Gelbstich b      :   2,7

Le A 19 248

Beispiele 23 - 26 (Tabelle 2):

Für die folgenden Beispiele wurde Feinpapierkaolin kontinuierlich in eine Stoßerhitzungs- und Temperapparatur über ein Silo und einen Injektionsteil eingetragen.

Im Stoßerhitzungsteil wurde das Produkt entwässert, indem aus einer Vorverbrennungskammer heiße Verbrennungsgase von der Temperatur $T_E$ eingeleitet wurden und das von oben eingedüste Produkt mittels eines Zusatzgases auf die gewünschte Ausgangstemperatur $T_A$ gebracht wurde. Die Abscheidung in ein Temperrohr erfolgte durch einen Zyclon. Die Verweilzeit des Produktes darin konnte durch den Takt einer Schleuse eingestellt werden. Die Temperatur $T_p$ im Produkt lag nahe bei $T_A$, was durch eine elektrische Zusatzheizung und eine gute Isolierung des Temperrohres und des Zyclons erreicht wurde. Knapp über der Schleuse konnte durch das Produkt hindurch Kohlenmonoxid und gegebenenfalls Chlorwasserstoff eingeleitet werden. Der aufgehellte M-Kaolin wurde über eine Schleuse ausgetragen.

Das nach den Beispielen 23 - 26 erhaltene Glühprodukt war röntgenographisch Metakaolin.

Le A 19 248

Le A 19 248

**Tabelle 2:** Eigenschaften von stoßerhitzten Kaolinpigmenten

Herstellungsbedingungen:

Durchsatz Stoßerhitzung: 20 kg/h

Verweilzeit während der Stoßerhitzung: 0,1 sec.

Verhältnis Erdgas : Brennerluft= ca. 1 : 14

$T_E$: 1000 – 1100 $^oC$       $T_A$: 800 $^oC$

| Beispiel | Verweilzeit während d. Temperung (min.) | Gaszusatz ($m_n^3$ / h) CO | HCl | $T_P$ $^oC$ | Kaolinpigmenteigenschaften: Relativer Abrieb (%) | Hellig-keit L | Gelb-stich b | spez. Oberfl. nach BET ($m^2$ / g) | Teilchengrößenverteilung Radius (%) $<6~\mu m$ | $<3~\mu m$ | mittlerer Radius ($\mu m$) |
|---|---|---|---|---|---|---|---|---|---|---|---|
| 23* | – | – | – | – | 71 | 93,6 | 3,6 | 17,0 | 91 | 63 | 2,8 |
| 24* | 30 | – | – | 800 | 79 | 95,0 | 4,1 | 13,5 | 93 | 35 | 3,0 |
| 25** | 30 | 0,4 | – | 800 | 76 | 95,4 | 2,3 | 13,7 | 95 | 37 | 3,0 |
| 26** | 20 | 0,4 | 0,25 | 800 | 87 | 96,6 | 1,9 | 13,0 | 91 | 40 | 2,9 |
| zum Vergleich ohne Stoßerhitzung: | | | | | | | | | | | |
| 20 | | | | | 147 | 97,4 | 2,8 | 4,9 | 54 | 19 | 5,5 |

\* Vergleichsbeispiele 23: ohne Temperung

24: mit Temperung, ohne Gaszusatz

\*\* erfindungsgemäß

Tabelle 3: Xeno-Kurzzeitbewitterung von M-Kaolinen

Bestrahlungsgerät: 150 W, 5 IR- und 2 UV-Fenster

Wasserbesprühung in Abständen von 30 Min. und von 1,5 Min. Dauer

| Beispiel | Versuchszeit (h) | Farbabstand $\triangle E^{1)}$ | Versuchszeit (h) | Farbabstand $\triangle E^{1)}$ |
|---|---|---|---|---|
| $1^{2)}$ | 158 | 2,0 | 325 | 2,6 |
| 9 | 158 | 2,0 | 325 | 2,1 |
| 26 | 119 | 0,25 | 325 | 1,2 |
| 27 | 119 | 0,45 | 325 | 1,3 |

1) $\triangle E = \sqrt{(\triangle L)^2 + (\triangle a)^2 + (\triangle b)^2}$

2) Vergleichsbeispiel

Patentansprüche

1. Verfahren zur Herstellung eines Tonpigmentes durch Glühen von Ton, dadurch gekennzeichnet, daß der Ton in Gegenwart von ungefärbten Halogeniden und/oder von Halogenen bei Temperaturen zwischen 700 und 950°C geglüht wird.

2. Verfahren nach Anspruch 1, dadurch gekennzeichnet, daß die Glühung unter reduzierenden Bedingungen und gegebenenfalls in Gegenwart von Alkaliverbindungen durchgeführt wird.

3. Verfahren nach Anspruch 2, dadurch gekennzeichnet, daß als Alkaliverbindung Soda eingesetzt wird.

4. Verfahren nach einem der Ansprüche 1 bis 3, dadurch gekennzeichnet, daß als ungefärbtes Halogenid Kochsalz oder Chlorwasserstoff verwendet wird.

5. Verfahren nach einem der Ansprüche 2 bis 4, dadurch gekennzeichnet, daß als Reduktionsmittel Kohlenstoff und/oder CO-haltige Gase verwendet werden.

6. Verfahren nach einem der Ansprüche 1 bis 2 und 3 bis 5, dadurch gekennzeichnet, daß das Entwässern des Tons durch Stoßerhitzung bei Temperaturen zwischen 600 und 1.000°C bei einer Verweilzeit von 0,01 bis 5 Sekunden und anschließende Temperung bei Temperaturen zwischen 700 und 950°C erfolgt.

Le A 19 248

- 19 -

7. Verwendung von Tonpigmenten, hergestellt gemäß
   einem der Ansprüche 1 bis 6, für die Einarbeitung
   in Farben, Lacke, Füllungen und Beschichtungen.

Le A 19 248

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| X | FR - A - 2 271 186 (KAOLINS DU MORBIHAN)<br><br> * Seite 1, Zeilen 3-17; Seite 2, Zeilen 1-10 *<br><br>-- | 1,6 | C 09 C 1/42<br>C 04 B 33/10 |
| D | US - A - 3 941 872 (PUSKAR)<br><br> * Spalte 1, Zeilen 6-12; Spalte 2, Zeilen 22-27, 38-67 *<br><br>-- | 1,5 | |
| | FR - A - 1 150 507 (CENTRE NATIO-NAL DE LA RECHERCHE)<br><br> * Seite 1, rechte Spalte, Ab-schnitte 3 und 4 *<br><br>-- | 1,2,3,5 | **RECHERCHIERTE SACHGEBIETE (Int. Cl. 3)**<br><br>C 09 C 1/42<br>C 04 B 33/10<br>C 09 C 3/04<br>3/06 |
| | DE - C - 582 369 (KRUGER)<br> * Seite 1, Zeilen 17-31 *<br><br>-- | 1 | |
| | DE - C - 54 210 (WALLBRECHT)<br> * Patentanspruch *<br><br>-- | 1 | |
| | BE - A - 477 315 (NEDERLANDSCHE CENTRALE ORGANISATIE)<br><br> * Seite 3, Beispiel II; Seite 4, Ansprüche 1,6 *<br><br>-- | 1,2,4 | **KATEGORIE DER GENANNTEN DOKUMENTE**<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze |
| | US - A - 3 309 214 (PODSCHUS et al)<br> * Spalte 1, Zeilen 40-48, 62-65; Spalte 2, Zeilen 1-2, 49-52 *<br><br>-- | 1,6,7<br><br>./. | E: kollidierende Anmeldung<br>D: in der Anmeldung angeführtes Dokument<br>L: aus andern Gründen angeführtes Dokument |
| | Der vorliegende Recherchenbericht wurde für alle Patentansprüche erstellt. | | &: Mitglied der gleichen Patent-familie, übereinstimmendes Dokument |
| **Recherchenort**<br>Den Haag | **Abschlußdatum der Recherche**<br>31-01-1980 | | **Prüfer**<br>KERRES |

EPA form 1503.1 06.78

Europäisches
Patentamt

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| A | <u>GB - A - 1 181 491</u> (BURGESS PIGMENT) | | |
| A | <u>US - A - 3 765 921</u> (PUSKAR) | | |
| | ---- | | **RECHERCHIERTE SACHGEBIETE (Int. Cl. 3)** |